# EUROPEAN PATENT APPLICATION

(11) **EP 1 545 124 A1**
(43) Date of publication of application: **22.06.2005**
(21) Application number: 03079128.9
(22) Date of filing: 19.12.2003
(51) Int. Cl.: H04N 5/44

(54) **Device and method for providing video and audio data**

(71) Applicant: Meurs, Rogier Filip, 46446 Emmerich (DE); ten Velde, Theodorus Johannes, 3904 PN Veenendaal (NL)
(72) Inventor: Meurs, Rogier Filip, 46446 Emmerich (DE); ten Velde, Theodorus Johannes, 3904 PN Veenendaal (NL)
(74) Representative: Hylarides, Paul Jacques

(57) **Abstract**

The present invention relates to a device for modifying the image and/or sound of a television channel provided by a television set, comprising:
- an input for inputting data of a television channel, wherein the input data comprise video data, audio data and/or co-transmitted control data;
- an output for outputting the data to the television set for providing image and/or sound thereon;
- storage means for storing information which is representative of unwanted images and/or sounds in the inputted data;
- comparing means for comparing the inputted data with the unwanted information;
- modifying means for modifying the inputted data when the inputted data contain unwanted information.

## Description

The present invention relates to a device and a method for modifying the image and/or sound provided by a television set.

Television viewers can choose nowadays from a varied quantity of television channels. Such a large number of television channels is offered via an own (satellite) antenna or, in particular, via the cable that each individual television viewer can find a suitable programme. While watching the programme however, the viewer still sometimes experiences annoyance or even irritation as a result of the fact that unwanted messages, such as commercials and the like, are shown during the programme. These commercials are furthermore shown not only before and after a television programme, but often also during interruptions therein.

Not only such interruptions of a television programme by advertising but also other broadcasts can also be designated as undesirable by the viewer. Particular recurring programmes such as news bulletins, traffic reports and the like, or specific television series for instance can thus cause annoyance to the viewer.

When advertising is shown at the moment, the viewer will take his/her remote control and have the television set switch over to another television channel in the hope of escaping the unwanted programme. However, this means that the remote control must be continuously within reach to enable immediate switching to another television channel. It is furthermore necessary to switch back each time to the original television channel in order to be able to determine when the advertising has finished.

It is an object of the present invention to provide a device and method wherein the above stated drawbacks are obviated and whereby the television viewer can enjoy watching television programmes with more pleasure.

This object is achieved according to a first aspect of the invention in a device for modifying the image and/or sound of a television channel provided by a television set, comprising:
- an input for inputting data of a television channel, wherein the input data comprise video data, audio data and/or co-transmitted control data;
- an output for outputting the data to the television set for providing image and/or sound thereon;
- storage means for storing information which is representative of unwanted images and/or sounds in the inputted data;
- comparing means for comparing the inputted data with the unwanted information;
- modifying means for modifying the inputted data when the inputted data contain unwanted information. The device can be connected between the antenna or cable and the television set or between a video recorder and the television set. By comparing the inputted television signal, i.e. the inputted video data, audio data and/or control data, with the stored'information concerning unwanted commercial breaks, adverts, television series, recurring programmes such as news bulletins etc., it is possible to determine when the viewer is presented with the unwanted information. When no television signal corresponding to the unwanted information is being transmitted, the television signal will be passed unaltered to the television set. When a television signal corresponding with at least a part of the unwanted information is being transmitted, the modifying means can modify the inputted television signal.

In a preferred embodiment the device comprises a clock which can be coupled to the modifying means. The clock provides time data, which are understood to include the time of day, the date, the time duration after a determined event etc., to the modifying means. This can have the object of suppressing the inputted data for a determined interval after detection of unwanted data. After a time the inputted data are then transmitted again unaltered. The time data can also be used in determining whether determined inputted data are unwanted. Data can for instance be desired at an early time, while this does not necessarily have to be the case at a later time. In such an embodiment the modifying means are adapted to cause the decision as to whether the inputted data must be modified to depend on the time data provided by the clock.

According to a determined preferred embodiment, the modifying means are adapted to replace the inputted data of the television channel with inputted video and/or audio data of another television channel. Switching to another television channel prevents the viewer being confronted with the unwanted television signal. To which of the many available television channels is switched is preferably predetermined, for instance by storing data relating thereto on the storage means.

In a further preferred embodiment the modifying means are adapted to replace the inputted data with predetermined data. An example hereof is that the screen is made temporarily uniform and is as it were suppressed.

In another preferred embodiment the device comprises second storage means for pre-storing replacement data, wherein the modifying means are adapted to replace the inputted data of the television channel with the pre-stored replacement data. It is possible here to envisage programmes or parts of programmes, music videos, animated films, etc. preselected by the viewer. During the broadcast of a commercial break the viewer then gets to see these replacement programmes on his/her television set.

In a further preferred embodiment the device is provided with means for retrieving data for storing on the storage means from an external computer, preferably via the internet. A terminal can for instance be provided to which a USB cable can be connected in order to enable communication between the device and a computer. The most recent information whereby unwanted television broadcasts can be identified can then be retrieved from the internet. In a particular embodiment the device further comprises selection means for allowing a user to select the data for modifying, preferably via the internet. The user (viewer) can himself then choose during which unwanted commercials, television programmes and the like the device must intervene. Files in which the replacement data are stored can moreover be selected and retrieved from the internet. The viewer can himself then choose which images and/or sounds must replace the unwanted advertising, television programmes and the like.

The viewer himself can carry out retrieval of data at set times. The device is however preferably provided with retrieving means which are adapted to periodically retrieve new unwanted information or replacement data. Automatic retrieval of the data ensures that the most recent data are always available.

In another preferred embodiment the data which are to be stored on the storage means are made available by an external data carrier, such as a floppy disc or a CD-ROM. In order to read the data carrier the device comprises in a further preferred embodiment reading means for reading unwanted information and/or the replacement data stored on an external data carrier.

A further preferred embodiment comprises counter means for counting the number of times that the inputted data contain unwanted information and wherein the modifying means are adapted to only modify the inputted data after a preset number of times. If desired, a commercial is allowed through a few times before being designated as unwanted, so that the viewer need not miss any commercials yet still does not have to watch them over and over again.

A further preferred embodiment comprises a clock for providing time data, wherein the clock is coupled to the modifying means and the modifying means are adapted to decide, on the basis of the provided time data, whether the inputted data can be modified.

According to another aspect of the invention, there is provided a method for modifying the image and/or sound of a television channel provided by a television set, comprising of:
- inputting data of a television channel, wherein the input data comprise video data, audio data and/or co-transmitted control data;
- comparing the inputted data with pre-stored unwanted information which is representative of unwanted images and/or sounds in the inputted data;
- modifying means for modifying the inputted data when the inputted data contain unwanted information;
- outputting the data to the television set for providing image and/or sound thereon.

The method preferably comprises of leaving the inputted data substantially unaltered when the inputted data contain none of or at least too little of the unwanted information.

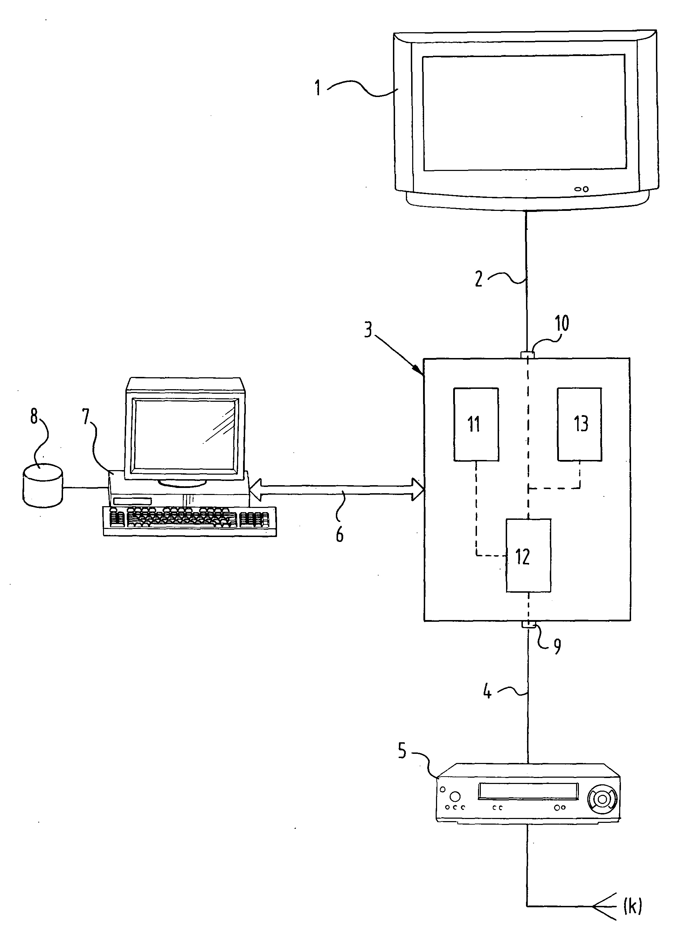

Further advantages, features and details of the present invention will be elucidated on the basis of a description of a preferred embodiment thereof. Reference is made in the description to the figure, in which a schematic diagram of the system according to the invention is shown.

The figure shows a television set 1 which is connected to a TV master unit 3 via a scart-cable 2. TV master unit 3 is connected to a video recorder 5 via a scart-cable 4. Video recorder 5 is connected to an external antenna or to the cable network (k). TV master unit 3 is likewise connected via a USB cable 6 to the home computer 7 of the viewer. This home computer is connected to the internet 8 via a modem (not shown).

TV master unit 3 comprises an input 9 via which the data of a television channel generated by video recorder 5, such as video data, audio data and optionally co-transmitted control data, can be inputted into TV master unit 3. Control data can for instance be understood to mean the data transmitted as part of the PDC (Programming Delivery Control) technique and the VPS (Video Programmes System). These functions ensure a safe and timely timer recording. In these systems special code signals are transmitted simultaneously with the audio/video signal. These code signals contain date, start time and end time of the current programme and are intended for control of the video recorder.

TV master unit 3 also comprises an output 10 via which the optionally modified data are transmitted to television set 1. TV master unit 3 comprises inter alia a memory 11 and a central processor unit 12. In memory 11 can be stored files which comprise information with which unwanted programmes can be detected. Central processor unit 12 compares the data flow (analog or digital television signal) inputted via scart cable 4 and input 9 with the unwanted information stored in memory 11, and modifies the inputted data flow immediately or after a time delay when it is determined that inputted data do indeed contain unwanted information. The data for modifying the inputted data flow can be generated by the central processor unit 12 itself, for instance if the unwanted programme is suppressed, or can be retrieved from a second memory 13. In an embodiment which is not shown, both memories 11 and 13 are otherwise combined into a single memory.

TV master unit 3, in particular the central processor unit 12, progressively compares the viewed television channel with the files with unwanted information present in the memory. These files, which are directly supplied and/or automatically retrieved by subscription via internet and/or designated by the viewer him/herself, are deemed as unwanted and are replaced by TV master unit 3 with a different file, determined by the viewer him/herself, which is stored in memory 13.

During the programme the central processor unit 12 determines whether there is a known unwanted file by means of the audio signal and/or the video signal and/or co-transmitted other signals, optionally making use of an internal clock. TV master unit 3 then replaces this with a file which is specified by the viewer him/herself and which is partly co-transmitted, partly obtained via internet, and/or switches to another channel.

If desired, a new commercial is allowed through a few times before being designated as unwanted, so that the viewer need not miss any commercials, yet still does not have to watch them over and over again.

The user setting of TV master unit 3 takes place via a programme which is supplied on diskette or CD and differing per country and which also ensures updating of the unwanted files, automatically if desired. Via this same programme a website can be visited listing all new commercials and programmes which can be activated as being unwanted by the viewer, or deactivated if desired.

The operation of the TV master unit can be set by the viewer by operating control buttons (not shown) provided on the master unit itself. In a further embodiment (not shown), TV master unit 3 can however be controlled at distance by making use of a remote control. The remote control transmits (infrared) radiation to an infrared sensor (or radiographic sensor) provided on TV master unit 3, similarly to that already known for the television set. Separate remote controls can herein be applied to control the television set and the TV master unit. It is however recommended to provide a single remote control for both the television set and the television master unit. When applying the remote control intended for the television set, use can be made of the unused standard control codes that are still available.

It is otherwise noted that embodiments are also possible wherein the video recorder is omitted. The TV master unit can in this case be connected directly to the cable antenna, satellite antenna or antenna of other random type. In this embodiment the TV master unit contains a television channel selector, as originally present in the video recorder. The viewer can him/herself now select the desired television channel via the TV master unit. In addition, embodiments can be envisaged wherein the channel selector, the TV master unit and the television set are integrated.

The present invention is not limited to the described preferred embodiments; the rights sought are defined by the following claims, within the scope of which many modifications can be envisaged.

## Claims

1. Device for modifying the image and/or sound of a television channel provided by a television set, comprising:
- an input for inputting data of a television channel, wherein the input data comprise video data, audio data and/or co-transmitted control data;
- an output for outputting the data to the television set for providing image and/or sound thereon;
- storage means for storing information which is representative of unwanted images and/or sounds in the inputted data;
- comparing means for comparing the inputted data with the unwanted information;
- modifying means for modifying the inputted data when the inputted data contain unwanted information.

2. Device as claimed in claim 1, wherein the modifying means leave the inputted data unaltered when the inputted data do not contain any unwanted information.

3. Device as claimed in claim 1 or 2, wherein the unwanted information relates to data of unwanted advertising and/or television programmes.

4. Device as claimed in any of the foregoing claims, wherein the modifying means are adapted to replace the inputted data of the television channel with inputted video and/or audio data of another television channel.

5. Device as claimed in claim 4, wherein the modifying means select the other television channel on the basis of television channel data stored on the storage means.

6. Device as claimed in any of the foregoing claims, wherein the modifying means are adapted to replace the inputted data with predetermined data.

7. Device as claimed in any of the foregoing claims, which comprises second storage means for pre-storing replacement data, wherein the modifying means are adapted to replace the inputted data of the television channel with the pre-stored replacement data.

8. Device as claimed in any of the foregoing claims, which is provided with means for retrieving the data for storing on the storage means from an external computer, preferably via the internet.

9. Device as claimed in any of the foregoing claims, wherein retrieving means are provided which are adapted to periodically retrieve new unwanted information or replacement data from the external computer.

10. Device as claimed in any of the foregoing claims, which comprises reading means for reading unwanted information and/or the replacement data stored on an external data carrier.

11. Device as claimed in any of the foregoing claims, which comprises selection means for allowing a user to select the data for modifying, preferably via the internet.

12. Device as claimed in any of the foregoing claims, which comprises counter means for counting the number of times that the inputted data contain unwanted information and wherein the modifying means are adapted to modify the inputted data only after a preset number of times.

13. Device as claimed in any of the foregoing claims, which comprises a clock for providing time data, wherein the clock is coupled to the modifying means and the modifying means are adapted to decide, on the basis of the provided time data, whether the inputted data are to be modified.

14. Device as claimed in any of the foregoing claims, wherein the comparing means are adapted to progressively compare the inputted data and the unwanted information.

15. Device as claimed in any of the foregoing claims, wherein the first and second storage means are integrated.

16. Device as claimed in any of the foregoing claims, comprising a sensor for sensing control signals, preferably an infrared sensor for sensing infrared control signals for the purpose of controlling at least one of the modifying means, retrieving mean, reading means, selecting means, counter means, comparing means and the clock.

17. Device as claimed in any of the foregoing claims, wherein the modifying and comparing means comprise a central processor unit.

18. External data carrier as claimed in any of the foregoing claims, on which the unwanted information and/or the replacement data are stored.

19. Method for modifying the image and/or sound of a television channel provided by a television set, comprising of:
- inputting data of a television channel, wherein the input data comprise video data, audio data and/or co-transmitted control data;
- comparing the inputted data with pre-stored unwanted information which is representative of unwanted images and/or sounds in the inputted data;
- modifying means for modifying the inputted data when the inputted data contain unwanted information;
- outputting the data to the television set for providing image and/or sound thereon.

20. Method as claimed in claim 19, comprising of leaving the inputted data substantially unaltered when the inputted data contain none of or at least too little of the unwanted information.

21. Method as claimed in claim 19 or 20, comprising of replacing the inputted data of the television channel with video and/or audio data of another television channel.

22. Method as claimed in claim 21, comprising of selecting the other television channel on the basis of pre-stored data.

23. Method as claimed in any of the claims 19-22, comprising of replacing the inputted data with predetermined data.

24. Method as claimed in any of the claims 19-23, comprising of replacing the inputted data with pre-stored replacement data.

25. Method as claimed in any of the claims 19-24, comprising of allowing a user to choose, preferably via the internet, the data for modifying from a larger collection of data for modifying.

26. Method as claimed in any of the claims 19-25, comprising of counting the number of times that the inputted data contain unwanted information and only modifying the inputted data after a preset number of times.

27. Method as claimed in any of the claims 19-26, comprising of modifying the inputted data subject to the time and/or the date.

28. Device for applying the method as claimed in any of the claims 19-27.

29. System comprising a television set, a video recorder, and a device connected between the television set and the video recorder for modifying the image and/or sound of a television channel provided via an antenna cable, wherein the device is **characterized by** any of the claims 1-19.
